# EUROPÄISCHE PATENTANMELDUNG

(11) **EP 1 645 390 A1**
(43) Veröffentlichungstag der Anmeldung: **12.04.2006**
(21) Anmeldenummer: 04023875.0
(22) Anmeldetag: 07.10.2004
(51) Int. Cl.: B29C 45/14

(54) **Spritzgiessverfahren für das Hinterspritzen von Dekorelementen**

(71) Anmelder: Burg Design GmbH, 4431 Haidershofen (AT)
(72) Erfinder: Turner, Martin Dr., 4101 Feldkirchen (AT)
(74) Vertreter: Vinazzer, Edith

(57) **Zusammenfassung**

Die Erfindung betrifft ein Verfahren zur Herstellung eines Kunststoffbauteiles durch Hinterspritzen eines zumindest zum Teil mit einer Farbschicht bedeckten, in eine Spritzgießform eingelegten, ein- oder mehrlagigen Dekorelementes.

Vor dem Hinterspritzen wird auf der Farbschicht (6) an dessen der bzw. den Angusstelle(n) gegenüberliegenden Bereich(en) jeweils ein Patch (8) aus einer hochtemperaturbeständigen Folie platziert.

## Beschreibung

Die Erfindung betrifft ein Verfahren zur Herstellung eines Kunststoffbauteiles durch Hinterspritzen eines zumindest zum Teil mit einer Farbschicht bedeckten, in eine Spritzgießform eingelegten, ein- oder mehrlagigen Dekorelementes.

Derart hergestellte Bauteile sind beispielsweise Innenausstattungsteile von Kraftfahrzeugen, wobei die Dekorelemente vorgeformte Teile sind, die meist einen mehrschichtigen Aufbau mit einer transparenten oder durchscheinenden Kunststofffolie aufweisen, die an ihrer Innenseite mit einem Dekor aus einer Farbe bedruckt ist und / oder mit einer Farbschicht bedeckt ist. Ein derartiges Dekorelement und ein mit einem solchen Dekorelement versehenes Kunststoffbauteil sind beispielsweise aus der WO 03/033306 bekannt.

Durch Hinterspritzen von Dekorelementen lassen sich optisch ansprechend gestaltete und auf unterschiedliche Weise geformte Bauteile herstellen. Als problematisch hat sich jedoch herausgestellt, dass beim Hinterspritzen im Bereich der den Angusstellen gegenüberliegenden Stellen durch den Spritzdruck und die Temperatur der Kunststoffschmelze die Farbschicht des Dekorelementes lokal ausgewaschen wird, sodass am fertigen Kunststoffbauteil an diesen Stellen die Kunststoffträgerschicht durchscheint.

Der Erfindung liegt daher die Aufgabe zu Grunde sicherzustellen, dass beim Hinterspritzen eines Dekorelementes, welches innenseitig mit einer Farbschicht versehen ist, Auswaschungen und lokale Zerstörungen der Farbschicht vermieden werden.

Gelöst wird die gestellte Aufgabe erfindungsgemäß dadurch, dass vor dem Hinterspritzen auf der Farbschicht an dessen der bzw. den Angusstelle(n) gegenüberliegenden Bereich(en) jeweils ein Patch aus einer hochtemperaturbeständigen Folie platziert wird.

Das gegenüber der jeweiligen Angusstelle vor dem Einspritzen der Kunststoffschmelze platzierte Patch aus einer hochtemperaturbeständigen Folie verhindert wirkungsvoll Auswaschungen und somit eine lokale Zerstörung der Farbschicht.

Als besonders geeignet hat sich als Material für das Patch eine Polyimidfolie herausgestellt. Dieses Material ist besonders hochtemperaturbeständig und in einer Stärke verfügbar, die die Qualität des Kunststoffbauteils nicht beeinflusst.

Die Patches werden bevorzugt aus einer Folie einer Stärke von 0,025 mm bis 0,07 mm erstellt. Sie sind im fertigen Kunststoffbauteil erhalten, aber von außen nicht sichtbar.

Bei den üblichen Drücken und Temperaturen der Kunststoffschmelze hat sich die Verwendung von Patches in Kreisform, in elliptischer Form oder in rechteckiger Form bei Durchmessern in der Größenordnung von 1,5 cm bis 2 cm als ausreichend herausgestellt, um Auswaschungen der Farbschicht zu verhindern.

Um eine gute Haftung der Patches auf der Farbschicht des Dekorelementes vor dem Hinterspritzen sicherzustellen sind diese einseitig mit einem hitzebeständigen Silikonkautschukkleber bedeckt.

Die Erfindung betrifft ferner Kunststoffbauteile, die gemäß den Verfahrensansprüchen hergestellt sind.

Weitere Merkmale, Vorteile und Einzelheiten der Erfindung werden anhand der schematischen Zeichnung näher beschrieben. Dabei zeigen
Fig. 1 eine Schrägansicht eines Ausschnittes eines erfindungsgemäß hergestellten Bauteils, welches durch Hinterspritzen eines in eine Form einlegbaren Dekorelementes hergestellt wird und
Fig. 2 eine Innenansicht eines Ausschnittes eines Dekorelementes vor dem Hinterspritzen.

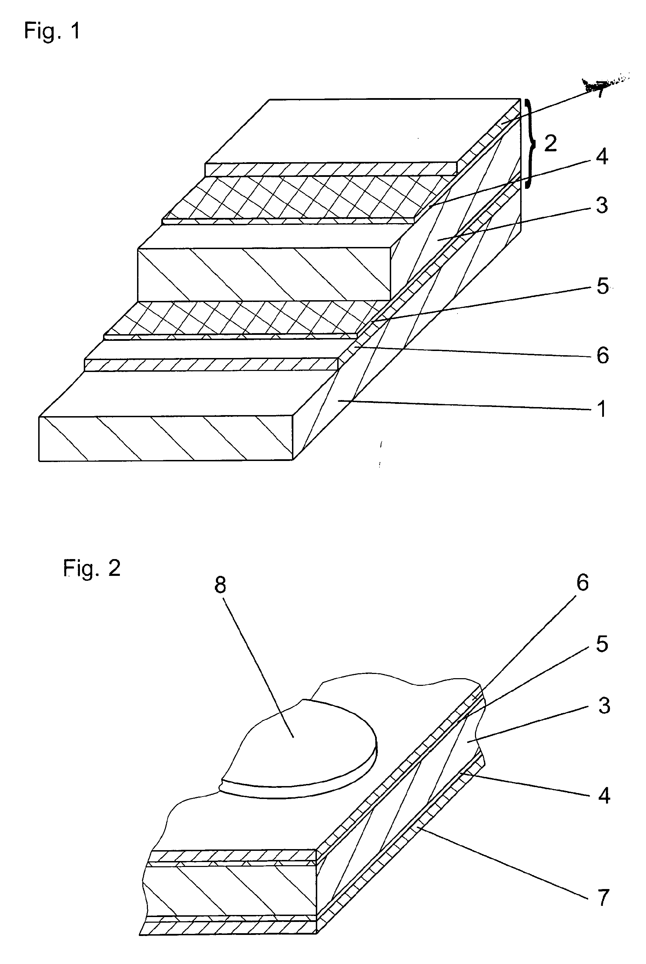

Fig. 1 zeigt beispielhaft einen kleinen Ausschnitt eines Bauteils aus einem Kunststoffbasisteil 1, welcher an seiner Außenseite mit einem Dekorelement 2 versehen ist. Das Dekorelement 2 besteht aus einer transparenten oder transluzenten Kunststofffolie 3, die bei der dargestellten Ausführungsform beidseitig mittels Siebdruck mit einem aus einer Farbschicht gebildeten Dekor 4, 5 versehen ist. Jedes Dekor 4, 5 wird von einem nicht flächenbedeckenden Muster gebildet, indem die aufgedruckte Farbe die ausgewählten Strukturen umrandet oder nachzeichnet. Das an der Innenseite der Folie 3 aufgebrachte Dekor 5 ist zusätzlich mit einer Deckschicht 6 aus Farbstoff, die ebenfalls mittels Siebdruck aufgebracht wird, komplett bedeckt. Das an der Außenseite der Folie 3 aufgebrachte Dekor 4 ist mit einer transparenten Schutzfolie 7 bedeckt, die beispielsweise unter Zuhilfenahme eines Haftvermittlers, etwa eines Schmelzklebers, auflaminiert ist. Ein derartiges Dekorelement 2 ist übrigens Gegenstand der internationalen Anmeldung mit der Veröffentlichungsnummer WO 03/033306.

Die Folie 3 besteht vorzugsweise aus Polycarbonat oder Polymethylmethacrylat und weist eine Dicke zwischen 0,2 mm und 2 mm auf. Auf die beiden Folienseiten werden das vorgesehene Dekor 4, 5 und anschließend wird auf die Innenseite die Farbschicht 6 durch Siebdruck aufgebracht. Die derart bedruckte Folie 3 wird getrocknet und dehydriert. Anschließend wird, bei Bedarf, auf die Außenseite der Folie 3 die transparente Schutzschicht 7, welche insbesondere eine Polymethylmethacrylatfolie ist und eine konstante Dicke in der Größenordnung von 50 µm und 500 µm aufweist, aufgebracht. Das nun fertige Dekorelement 2 wird thermisch verformt, um es an die Form des herzustellenden Bauteils anzupassen. Das Dekorelement 2 entspricht von seiner Gestalt her dem Fertigteil und ist in seinen Dimensionen auf das Spritzgießwerkzeug abgestimmt. Vor dem Einlegen in die Spritzgießform oder bei bereits in die offene Spritzgießform eingelegtem Dekorelement 2 wird auf die Farbdeckschicht 6 an jener Stelle bzw. an jenen Stellen, welche bei geschlossener Spritzgießform der bzw. den Angusstelle(n) für die flüssige, heiße Kunststoffschmelze gegenüberliegt bzw. gegenüberliegen, jeweils ein Patch 8 appliziert. Das Patch 8 besteht aus einer sehr dünnen, hochtemperaturbeständigen Kunststofffolie, insbesondere einer Polyimidfolie einer Stärke von 0,025 mm bis 0,07 mm. Die Polyimidfolie ist einseitig mit einer dünnen Schicht eines hochvernetzten, hochhitzebeständigen Silikonkautschukklebers oder ähnlichem versehen und haftet mit diese Seite gut auf der Farbdeckschicht 6. Die vorzugsweise in Kreisform oder Rechteckform (Quadrat) aufgebrachten Patches 8 sollten einen Durchmesser aufweisen, welcher in Abhängigkeit vom Spritzdruck und der Temperatur der Kunststoffschmelze in jedem Fall sicherstellt, dass sie als mechanische und thermische Barriere wirken und ein lokales Zerstören bzw. Wegwaschen der Farbschicht 6 durch den im Bereich der Angusstellen besonders stark wirkenden Spritzdruck der Kunststoffschmelze verhindern.

Bei den üblichen Spritzdrücken und Kunststoffschmelztemperaturen ist ein Durchmesser der Patches in der Größenordnung von 1,5 cm bis 2,5 cm ausreichend. Die Polyimidfolie wird beim Hinterspritzen und nachfolgenden Erstarren der Kunststoffschmelze nicht zerstört, sondern bleibt im fertigen Bauteil, von außen nicht sichtbar, erhalten. Eine geeignete Polyimidfolie ist unter dem für die Firma Du Pont eingetragenen Warenzeichen Kapton bekannt und erhältlich.

Die Erfindung ist bei der Herstellung aller Arten von Bauteilen einsetzbar, bei welchen ein ein- oder mehrschichtiges Element, welches innenseitig zumindest zum Teil mit einer Farbschicht bedeckt ist, hinterspritzt wird. An den Angusstellen für die Kunststoffschmelze gegenüberliegenden Bereichen der Farbschicht wird vor oder nach dem Einlegen in die Spritzgießform jeweils ein Patch 8 aus einer Polyimidfolie aufgebracht.

## Patentansprüche

1. Verfahren zur Herstellung eines Kunststoffbauteiles durch Hinterspritzen eines zumindest zum Teil mit einer Farbschicht bedeckten, in eine Spritzgießform eingelegten, ein- oder mehrlagigen Dekorelementes,
**dadurch gekennzeichnet,**
**dass** vor dem Hinterspritzen auf der Farbschicht (6) an dessen der bzw. den Angusstelle(n) gegenüberliegenden Bereich(en) jeweils ein Patch (8) aus einer hochtemperaturbeständigen Folie platziert wird.

2. Verfahren nach Anspruch 1, **dadurch gekennzeichnet, dass** das Patch (8) aus einer Polyimidfolie besteht.

3. Verfahren nach einem der Ansprüche 1 bis 2, **dadurch gekennzeichnet, dass** das Patch (8) eine Stärke von 0,025 mm bis 0,07 mm aufweist.

4. Verfahren nach einem der Ansprüche 1 bis 3, **dadurch gekennzeichnet, dass** das Patch (8) kreisförmig, elliptisch oder rechteckig ist und einen Durchmesser in der Größenordnung von 1,5 cm bis 2 cm aufweist.

5. Verfahren nach einem der Ansprüche 1 bis 4, **dadurch gekennzeichnet, dass** das Patch (8) einseitig mit einem hitzebeständigen Silikonkautschukkleber bedeckt ist.

6. Kunststoffbauteil, welches gemäß zumindest einem der Ansprüche 1 bis 5 hergestellt ist.
